# Europäisches Patentamt
# European Patent Office
# Office européen des brevets

(11) Numéro de publication: **0 067 250**
**B1**

(12) **FASCICULE DE BREVET EUROPEEN**

(45) Date de publication du fascicule du brevet: **24.02.88**

(51) Int. Cl.⁴: **G 05 B 19/04**

(21) Numéro de dépôt: **81201008.0**

(22) Date de dépôt: **10.09.81**

(54) Dispositif pour la commande électronique d'organes de métiers.

(30) Priorité: **17.06.81 BE 2059214**

(43) Date de publication de la demande:
**22.12.82 Bulletin 82/51**

(45) Mention de la délivrance du brevet:
**24.02.88 Bulletin 88/08**

(84) Etats contractants désignés:
**AT BE CH DE FR GB IT LI LU NL SE**

(56) Documents cités:
**EP-A-0 009 840**
**FR-A-2 073 660**
**FR-A-2 286 221**
**GB-A-1 289 035**
**GB-A-2 023 306**

(73) Titulaire: **Picanol N.V.**
**Polenlaan 3-7**
**B-8900 Ieper (BE)**

(72) Inventeur: **Rosseel, Henri**
**Brugseweg 68**
**B-8900 Ieper (BE)**

(74) Mandataire: **Donné, Eddy**
**M.F.J.Bockstael Arenbergstraat 13**
**B-2000 Anvers (BE)**

Courier Press, Leamington Spa, England.

## Description

La présente invention a trait à un dispositif pour la commande électronique d'organes de métiers, tels que, par exemple, mais non exclusivement, les organes du système d'introduction de la trame.

L'invention concerne, en particulier, un dispositif du genre défini ci-dessus constitué essentiellement par un système de moyens de codage et de programmation. Plusieurs modes d'exécution de pareils systèmes sont déjà connus. Ils se composent généralement de moyens de programmation similaires ou équivalents, mais présentent des différences nettes, voire importantes au niveau de laur système de codage.

C'est ainsi, par exemple, que dans le document NL—A—7511121 est décrit un dispositif de commande où le codage s'effectue sur le vilebrequin du métier par lecture de ce qu'on appelle des évènements électroniques. Or, les dispositifs de commande, qui se prêtent tout particulièrement à l'équipement de métiers à rapière, ne conviennent pas à l'équipement d'autres métiers, tels que les métiers dont l'insertion de fil de trame s'effectue par voie pneumatique, par projection ou à navette.

Le document DE—B—28 36 206 préconise la mise en oeuvre d'un système de codage purement mécanique, se prêtant à la lecture de degrés d'angle sur le vilebrequin. Cette solution, qui, comme la précédente, convient de manière excellente à l'équipement de métiers à rapière, présente des inconvénients sérieux dans les métiers sans accouplement mécanique de l'organe d'insertion du fil d'e trame, tels que les métiers à insertion pneumatique du fil de trame.

Un dispositif pour la commande électronique d'organes de métier à l'aide d'un générateur d'impulsions électrique a été proposé dans le document GB—A—1 289 035. Cependant ce dispositif n'offre pas la possibilité d'effectuer des commandes à l'intérieur du cycle opératoir du métier indépendamment de ce cycle.

Une des grandes difficultés des métiers à projection et surtout des métiers pneumatiques consiste en ce que l'insertion du fil de trame dans l'ouverture de la chaîne dépend d'un certain nombre de facteurs qui, somme toute, sont indépendants de la position angulaire du vilebrequin, tels que le temps de réaction des soupapes, l'élévation de la pression dans les tuyères, etc.

Le fait que la commande des tuyères d'un métier pneumatique pose des problèmes difficiles à résoudre est clairement illustré par le grand nombre de solutions préconisées jusqu'à présent dans les nombreux brevets concernés, tels que décrits dans les documents US—A—3.705.608 et 3.821.972, NL—A—176.481, GB—A—1.470.752, etc.

Or, la présente invention se propose de fournir une solution adéquate et efficace de ces problèmes, qui se prête tout particulièrement à la commande des métiers à projection et des métiers pneumatiques.

L'invention prévoit à cet effet la mise en oeuvre d'un dispositif pour la commande électronique d'organes de métiers qui consiste en un came dont le mouvement est synchrone avec la rotation du vilebrequin du métier et un premier générateur d'impulsions qui produit, à chaque cycle, un signal au moyen d'un détecteur électronique coopérant avec ladite came, caractérisé en ce que le dispositif consiste également en un deuxième générateur d'impulsions électrique remis en marche à chaque cycle par ledit signal du premier générateur en vue de l'émission d'un train d'un certain nombre d'impulsions à fréquence adjustable; un décodeur et un système matriciel en vue de la sélection d'impulsions dudit train d'impulsions, les signaux ainsi formés servant à la commande d'organes de machine à l'intérieur du cycle, indépendamment de la rotation du vilebrequin.

L'invention est illustrée ci-après par la description détaillée d'un mode d'exécution et d'une variante préférée de ce mode d'exécution, donnée avec référence aux deux schémas de câblage ci-annexés.

L'arbre principal du métier ou bien un arbre secondaire tournant en synchronisme avec lui, porte un premier générateur d'impulsions comportant une came 1 avec laquelle coopère un détecteur électronique (intrrupteur de proximité) 2, capable de prendre l'une ou l'autre de deux positions différentes, correspondant respectivement à l'ouverture et la fermeture d'un contact, selon qu'un objet métallique se rapproche de la surface du détecteur ou s'en éloigne.

Le détecteur 2, intégré dans un circuit électronique, émet ainsi une impulsion à chaque révolution de l'arbre, qui excite un deuxième générateur d'impulsions, électrique et/ou électronique, 4 par l'entremise d'un amplificateur 3.

Ce deuxième générateur ou "clock" 4 fournit un train d'impulsions dont la fréquence, c'est-à-dire le nombre d'impulsions par seconde, est réglable ou non.

Ce signal dûment profilé est envoyé vers un totalisateur 5, chargé du codage digital des signaux, c'est-à-dire en nombres décimaux, dont la première décade fournit par milliseconde et pendant une milliseconde un niveau (tension) élevé sur les dix lignes de sortie consécutives 7, et cela de manière, par exemple, que le ligne 2 se trouve à un niveau élevé entre la deuxième et la troisième des impulsions reçues, la ligne 3 se trouve à un niveau élevé entre la troisième et la quatrième des impulsions etc.

Chaque dixième impulsion est transmise à une deuxième décade 8, de manière à augmenter le signal sortant 9 de la troisième décade après chaque arrivée de dix impulsions et de maintenir ainsi la ligne de sortie 1 de la deuxième décade à son niveau élevé entre la dixième et la vingtième impulsion.

Les sorties 7 de la décade 6 correspondent ainsi aux unités et les sorties 9 de la décade 8 aux dizaines lors du comptage de impulsions du signal carré.

Il s'ensuit qu'en cas d'application de deux décades, le comptage se limite à 100 impulsions, ce qui est un nombre suffisant pour la plupart des applications.

L'arrêt du train d'impulsions est commandé à l'aide d'un signal d'arrêt envoyé dès l'arrivée de l'impulsion 99.

La neuvième sortie de la décade *6* et celle de la décade *8* sont envoyées par une connexion fixe à une porte *10,* dont la sortie est activée aussi longtemps que ces deux lignes se trouvent à leur niveau élevé, le signal de sortie étant chargé de l'arrêt du générateur *4,* qui est ensuite réactivé pendant la révolution suivante par le signal émis par le détecteur *2* de l'arbre principal au moment du passage de la came *1.*

*Les lignes de sortie 7* et *9* du totalisateur sont, en guise de connexions verticales, introduites dans une matrice (système matriciel) *11* dont les lignes de sortie horizontales peuvent être connectées entre-elles aux points de croisement, de manière connue, au moyen d'une broche de contact, ce qui permet de connecter une sortie de matrice quelconque à une entrée de totalisateur quelconque.

Les sorties de matrice horizontales forment les entrées de circuits à coïncidence, qui sont activées à l'arrivée d'une impulsion déterminée du deuxième générateur *4* par choix des lignes de sortie *7* et *9* du totalisateur.

La connexion sur l'impulsion *23, par exemple, signifie qu'est choisie la ligne 2* des décades *8,* qui fournit la tension requise entre les impulsions *20* et *30,* ainsi que la ligne *3* des unités *6,* qui se trouve à son niveau élevé entre la troisième et la quatrième impulsion.

L'élévation de niveau simultanée de ces deux lignes connectées à une porte *12* rend celle-ci active.

Dans ces conditions, le signal qui se présente à la sortie de la porte peut servir de signal de réglage d'un circuit de mémoire (circuit bistable) *13,* dont la remise à zéro s'effectue en un autre point choisi à volonté (48 dans le présent exemple), de manière à rendre disponible pendant un temps donné, choisi à volonté, une tension de commande, qui commande des circuits électroniques ultérieurs, ou bien met sous pression par l'entremise d'un amplificateur, le souffleur principal ou des souffleurs auxiliaires chargés de l'insertion du fil de trame, au moyen de soupapes magnétiques, dont une seule (*14*) est représentée.

L'insertion du fil de trame commence dès le relâchement du frein de fil *15* du métier. Il s'agit d'un frein mécanique, généralement commandé par une came, qui se déplace en synchronisme avec l'arbre principal du métier.

Comme au moment de l'ouverture du frein, une pression suffisante doit déjà régner dans le souffleur principal et éventuellement dans les souffleurs auxiliaires, l'émission du train d'impulsions, chargé de la commande de l'excitation de ces soupapes électriques, commence déjà à un moment antérieur du cycle.

Ce sont les caractéristiques des soupapes qui déterminent la durée en millisecondes et donc le temps d'excitation qui doit s'écouler jusqu'au moment de l'ouverture du frein de fil, ce qui est la raison pour laquelle l'émission du train d'impulsions commence déjà quelques millisecondes avant l'ouverture du frein, donc pendant un temps suffisamment long pour permettre la programmation. Ceci exige que le début de l'émission du train d'impulsions soit réglable par rapport au mouvement de la came. Il pourra s'agir, par exemple, d'un intervalle de 22 millisecondes.

Ce réglage pourrait, en théorie, s'effectuer par réglage du point d'enclenchement, c'est-à-dire de la position de la came dans le cycle opératoire du métier. Ce procédé présente toutefois de nombreux inconvénients dans la pratique et c'est pour éviter ces inconvénients que l'impulsion d'enclenchement est employée non à la commande directe du générateur, mais au démarrage d'un élément de retardement *16,* constitué en l'occurance par un circuit monostable électronique, dont la période de fonctionnement est réglable au moyen d'une résistance variable. Le générateur *4* est enclenché par la flanc terminal de la période de fonctionnement du circuit de retardement. Le réglage du retard permet de faire coïncider l'émission de l'impulsion désirée (par exemple l'impulsion *22* dans le présent exemple) avec l'ouverture du frein *15.*

Le frein du fil de trame est, à cet effet, muni d'un système de détection, par exemple sous forme d'une détecteur électrooptique *17,* qui, au moment de l'ouverture du frein, émet un signal permettant la réalisation d'une coïncidence avec l'impulsion voulue dans un système de mesure adéquat.

Si la première révolution de l'arbre principal du métier est un peu plus lente que la suivante, la synchronisation avec le frein du fil de trame *15* ne peut pas se réaliser.

Le générateur *4* ne connaît par la vitesse du métier et engendre une suite d'impulsions à partir du moment d'enclenchement réglé au préalable, à la fin du retard.

Là, où en cas de vitesse normale du métier un nombre déterminé d'impulsions a déjà été émis avant l'ouverture du frein mécanique *15,* ce nombre devrait être plus grand à la première insertion du fil de trame en cas de démarrage lent, ce qui provoquerait un retard de quelques millisecondes de l'ouverture de ce frein mécanique. La conséquence en serait un certain décalage de la programmation de l'insertion ralentie, exigeant une augmentation de la consommation au premier cycle par rapport à tous les cycles suivants pour assurer une insertion optimale. Cet inconvénient peut être évité par un réglage adéquat de la matrice *11* à un nombre de base qui correspond au nombre de millisecondes du train d'impulsions devant s'écouler jusqu'à ce que s'ouvre le frein et commence l'insertion du fil de trame (par exemple 22 millisecondes).

Le signal de sortie *18* de la porte, qui détecte la coïncidence des unités et des dizaines du nombre choisi, est envoyé en compagnie du signal d'ouverture du frein du fil de trame vers une autre porte *18*, dont la sortie est un des éléments essentiels du circuit de coïncidence *20* connecté entre le générateur et le totalisateur.

Si l'impulsion engendrée en fonction dudit nombre de base arrive plus tôt que celle qui se rapporte à l'ouverture du frein du fil de trame, le train d'impulsions émis par le deuxième générateur *4* n'est pas transmis aux totalisateurs *6* et *8*, qui restent bloqués sur le nombre chois au préalable. Mais dès que le détecteur *17* émet un signal concernant l'ouverture du frein du fil de trame, le signal de blocage est supprimé et le train d'impulsions peut continuer à commander les totalisateurs.

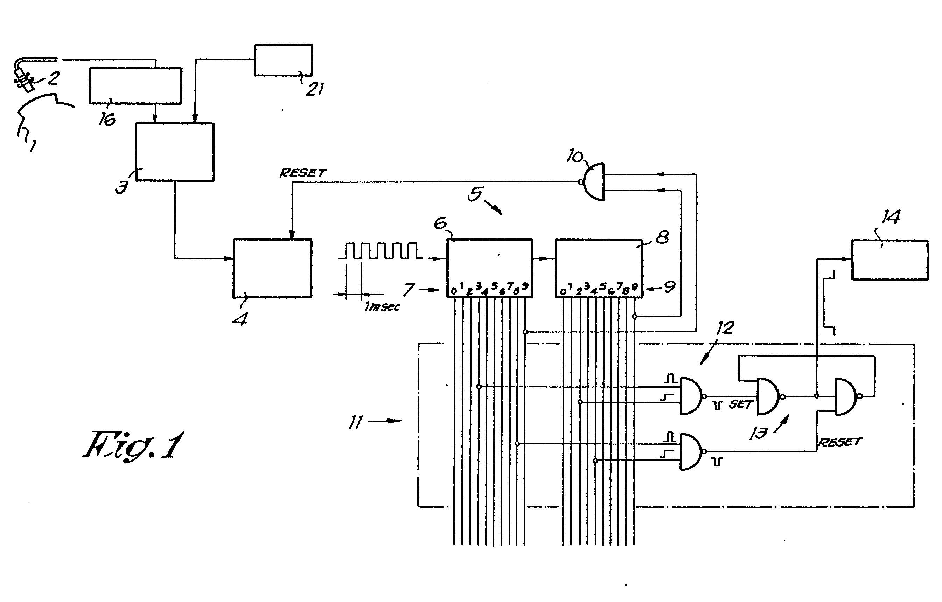

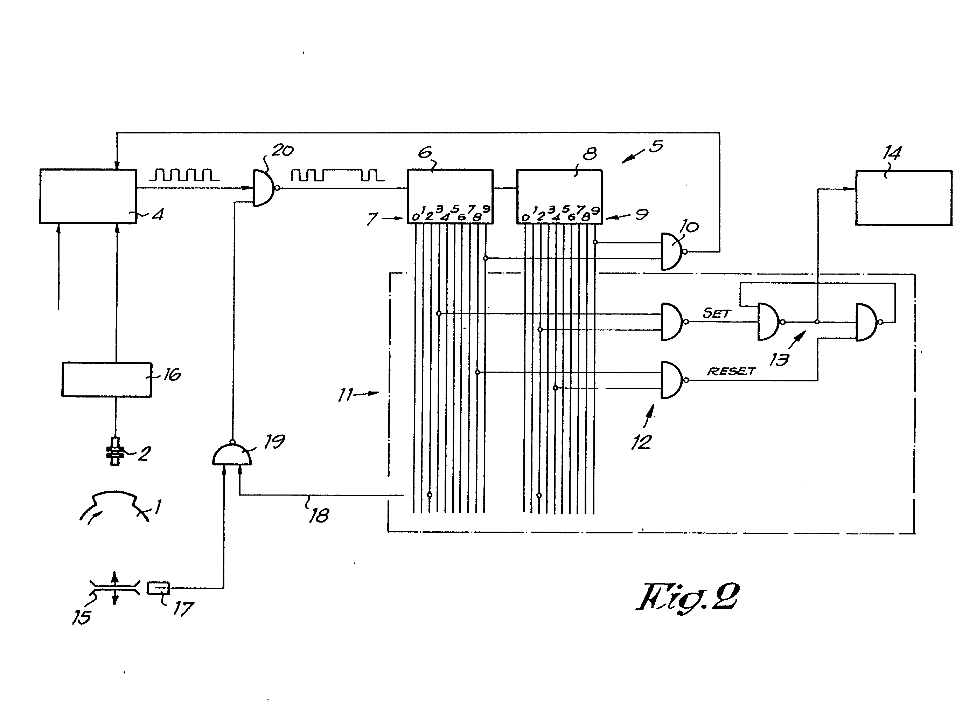

Une commande manuelle *21* pourra également être prévue (figure 1) pour permettre l'enclenchement du générateur *4* par voie manuelle.

Une extension du circuit décrit dans les lignes précédentes, qui est capable de détecter également l'arrivée prématurée du signal de synchronisme du frein du fil de trame (nombre d'impulsions "avant" insuffisant: temps unitaire trop long) permet la mise en oeuvre du système comme moyen de réglage avec possibilité de visualisation du réglage exact de la coïncidence entre le nombre d'impulsions choisi et le signal d'ouverture du frein du fil de trame au moyen d'une diode lumineuse (LED) rouge ou verte.

## Revendications

1. Dispositif pour la commande électronique d'organes de métiers qui consiste en un came (1) dont le mouvement est synchrone avec la rotation du vilebrequin du métier et un premier générateur d'impulsions qui produit à chaque cycle, un signal au moyen d'un détecteur électronique (2) coopérant avec ladite came, caractérisé en ce que le dispositif consiste également en un deuxième générateur d'impulsions électrique (4) remis en marche à chaque cycle par ledit signal du premier générateur en vue de l'émission d'un train d'un certain nombre d'impulsions à fréquence adjustable; un décodeur (5) et un système matriciel (11) en vue de la sélection d'impulsions dudit train d'impulsions, les signaux ainsi formés servant à la commande d'organes de machine (14,) à l'intérieur du cycle, indépendamment de la rotation du vilebrequin.

2. Dispositif selon la revendication 1, caractérisé en ce que les signaux servant à la commande d'organes de machine (14) passent par l'entrée et la sortie d'une mémoire électronique (13).

3. Dispositif selon la revendication 1, caractérisé en ce qu'entre ledit détecteur électronique (2) et ledit deuxième générateur d'impulsions électrique (4) est prévu un circuit de retardement (16) réglable.

4. Dispositif selon la revendication 1, destiné en particulier à l'équipement d'un métier à projection ou d'un métier pneumatique pourvu d'un frein de fil (15), caractérisé en ce que sont prévus des moyens de détection (17) pour détecter l'ouverture du frein de fil (15), les signaux ainsi formés étant associés à des signaux de synchronisation (18) provenant dudit système matriciel (11) dans le but d'influencer le deuxième générateur d'impulsions (4).

## Patentansprüche

1. Vorrichtung für die elektronische Steuerung eines Webautomatensystems, bestehend aus: einem Exzenter *1*, der synchron mit der Maschinenwelle dreht; einem ersten Impulsgenerator, der mittels einem elektronischen Detektor *2* der in Verbindung mit dem Exzenter arbeitet, bei jedem Maschinenzyklus ein Signal erzeugt; einem zweiten Impulsgenerator *4*, der in jedem Zyklus von besagten Signal vom ersten Impulsgenerator ausgelöst wird, und der eine Folge einer bestimmten Anzahl von Impulsen mit verstellbarer Frequenz erzeugt; einem Decoder *5*; und einer Matrix-Verbindungsstelle *11*, der zum Abruf der Impulse aus besagter Impulsfolge benutzt wird; dadurch charakterisiert, daß die auf diese Weise erhaltenen Signale zur Steuerung der Maschinensusteme *14* intern im Zyklus, aber unabhängig von der Drehung der Welle benutzt werden.

2. Vorrichtung gemäß Anspruch 1, die dadurch charakterisiert ist, daß die zur Steuerung der Maschinensysteme *14* benutzten Signale durch den Ein- und Ausgang eines elektronischen Speichers *13* geleitet werden.

3. Vorrichtung gemäß Anspruch 1, die dadurch charakterisiert ist, daß eine einstellbare Verzögerungsschaltung *16* zwischen besagten elektronischen Detektor *2* und besagten Impulsgenerator *4* angeschlossen ist.

4. Vorrichtung gemäß Anspruch 1, vor allem bestimmt für die Benutzung in einem Projektil- oder Luftdüsenwebautomaten mit einer Fadenbremse *15* und einer Vorrichtung *17* zur Feststellung des Lösens der Fadenbremse *15*, die dadurch charakterisiert ist, daß die auf diese Weise erzeugten Signale mit Synchronisationssignalen *18* von besagter Matrix-Verbindungsstelle *11* kombiniert werden, um auf den zweiten Impulsgenerator *4* einzuwirken.

## Claims

1. Device for electronic control of weaving machine systems, consisting of: a cam *1* which rotates in synchronisation with the machine shaft; a first pulse generator which produces a signal at each machine cycle by means of an electronic detector *2* operating in conjunction with the cam; a second electrical pulse generator *4* which is triggered on each cycle by said signal from the first generator and which produces a train of a certain number of pulses with adjustable frequency; a decoder *5*; and a matrix connector *11* which is used to select pulses from said pulse train; with the characteristic that the signals thus obtained are used to control the machine systems *14*, internally to the cycle but independently of the rotation of the shaft.

2. Device as in claim 1, with the characteristic that the signals used to control the machine systems (14) pass through the input and output of an electronic memory *13*.

3. Device as in claim 1, with the characteristic that an adjustable delay circuit *16* is connected between said electronic detector *2* and said pulse generator *4*.

4. Device as in claim 1, destined in particular for use with a projectile loom or airjet loom with a yarn brake *15*, and incorporating a means *17* for detecting the release of the yarn brake *15*, with the characteristic that the signals thus produced are combined with synchronisation signals *18* from said matrix connector *11* in order to act upon the second pulse generator *4*.

*Fig. 1*

Fig.2

0 067 250